Europäisches Patentamt

European Patent Office

Office européen des brevets

(19)

(11) Veröffentlichungsnummer: **0 152 440**
B1

(12) **EUROPÄISCHE PATENTSCHRIFT**

(45) Veröffentlichungstag der Patentschrift:
27.01.88

(21) Anmeldenummer: 84903062.2

(22) Anmeldetag: 09.08.84

(86) Internationale Anmeldenummer:
PCT/EP 84/00240

(87) Internationale Veröffentlichungsnummer:
WO 85/00755 (28.02.85 Gazette 85/5)

(51) Int. Cl.⁴: **A 63 C 15/05,** B 29 C 67/00,
B 29 K 105/00

(54) **VERFAHREN ZUR HERSTELLUNG VON SEGEL- BZW. WELLENREITBRETTERN SOWIE SEGEL-BZW. WELLENREITBRETT.**

(30) Priorität: 12.08.83 DE 3329230

(43) Veröffentlichungstag der Anmeldung:
28.08.85 Patentblatt 85/35

(45) Bekanntmachung des Hinweises auf die Patenterteilung:
27.01.88 Patentblatt 88/4

(84) Benannte Vertragsstaaten:
AT BE CH DE FR GB LI LU NL SE

(56) Entgegenhaltungen:
EP - A - 0 064 937
EP - A - 0 069 076
WO - A - 83/02599
DE - A - 3 030 275
FR - A - 1 528 068
NL - A - 7 214 060
US - A - 4 383 955

(73) Patentinhaber: TAA TECHNIQUE AND ADMINISTRATION AG, Peter Merian-Strasse 54 (RST), CH-4052 Basel (CH)

(72) Erfinder: FRANK, Wolfgang, Ludwig-Thoma-Str. 4 1/2, D-8206 Bruckmühl (DE)

(74) Vertreter: Grupe, Peter, Dipl.-Ing. et al, Patentanwaltsbüro Tiedtke-Bühling-Kinne-Grupe-Pellmann-Grams-Struif Bavariaring 4, D-8000 München 2 (DE)

**Beschreibung**

Die Erfindung bezieht sich auf ein Verfahren zur Herstellung eines Segel- bzw. Wellenreitbretts gemäss dem ersten Teil des Anspruchs 1 sowie auf ein Segel- bzw. Wellenreitbrett.

Ein bekanntes Verfahren dieser Art ist in der EP-A-0 069 076 beschrieben. Hiernach erfolgt das Ausgkleiden der Form mit der Oberflächenschicht in der Weise, dass die beiden Formhälften nach einer Behandlung mit einem Trennmittel mit einem Glasgewebe ausgelegt werden und dieses dann mit einer Mischung aus ungesättigtem Polyester und Butanox imprägniert wird. Nach dem Aushärten der Imprägniermassen in einem Umluftofen ist die ausgekleidete Form zur Aufnahme des vorbereiteten Schaumkerns bereit. Diese Herstellungsweise der Oberflächenschicht erlaubt keine rationelle Brettfertigung.

Bei einem in F2-News, Heft 1, 1983, S. 8, 9 beschriebenen Verfahren wird ein vorgefertigter EPS-Schaumkern mit Glasgewebe und -matte umwickelt, mit Epoxyschaum übergossen und in die Form eingelegt. Danach wird die Form geschlossen, so dass der Epoxyschaum aushärtet und zusammen mit dem Glasgewebe ein hartes Laminat bildet. Nach dem Entformen des Brettkörpers wird derselbe mit einer Fein- bzw. Gelschicht als Oberflächenschicht versehen, die aber auch bereits vor dem Einlegen des umwickelten EPS-Schaumkerns in die Form eingebracht werden kann. Diese sogenannte Epoxytechnik lässt Bretter hoher Steifigkeit und geringen Gewichts erzielen. Nachteilig sind die geringe Schlagfestigkeit des Laminats, die hohen Kosten des Epoxyschaums, die Gesundheitsgefährdung bei der Verarbeitung desselben und die relativ lange Taktzeit, die durch die Aushärtezeit des Epoxyschaums und die Herstellung der Oberflächenschicht bedingt ist.

In der EP-A-0 064 937 ist ein Verfahren zur Herstellung eines Segelbretts beschrieben, bei dem ein vorgefertigtes, mindestens bereichsweise Untermass aufweisendes Schaumkernelement aus EPS zum Ausgleich dieses Untermasses mit einer Fadengewirkmatte oder einem Gewirk aus Kokosfasern besetzt wird. Bei der Fadengewirkmatte handelt es sich um eine 15 mm dicke Matte aus relativ steifen Polypropylenfäden, die den von der Matte eingenommenen Raum unregelmässig durchlaufen und an Stellen gegenseitiger Berührung miteinander verschweisst sind. Gemäss der bekannten Einschalenbauweise wird das mit der Matte besetzte Schaumkernelement zwischen zwei tiefgezogene, noch erhitzte kompakte Schalenteile eingelegt und der von dem Fadengewirk gebildete Hohlraum nach dem Zusammenfügen der Formhälften ausgeschäumt. Eine Variante dieses bekannten Verfahrens liegt darin, anstelle des nachträglichen Ausschäumens des Mattenvolumens schäumende Klebemasse auf Polyurethanbasis vor dem Einlegen flächig auf das Schaumkernelement aufzutragen, was aber mangels Saugfähigkeit des Fadengewirks nur auf der oberen Seite des Schaumkernelements möglich ist. In beiden Fällen entsteht in der Kernrandzone eine fadenverstärkte Schaumschicht, die es erlaubt, das vorgefertigte Schaumkernelement leichter auszubilden. Auch bei einer derartig verstärkten Randzone des Schaumkerns muss die kompakte Brettschale relativ dick ausgeführt sein, so dass sich die bei laminierten Schalen erreichbaren Werte für das Verhältnis von Brettvolumen zu Brettgewicht nicht erreichen lassen.

Der Erfindung liegt die Aufgabe zugrunde, ein Verfahren gemäss dem ersten Teil des Anspruchs 1 so weiterzubilden, dass sich bei geringeren Kosten und kurzer Taktzeit Brettkörper herstellen lassen, die leicht, steif und schlagfest sind. Ferner ist es Aufgabe der Erfindung, ein Segel- bzw. Wellenreitbrett derart zu verbessern, dass es sich durch geringes Gewicht, ohne Steifigkeit und Schlagfestigkeit und niedrige Herstellungskosten auszeichnet.

Zur Lösung dieser Aufgabe werden ein Verfahren und ein Segel- bzw. Wellenreitbrett der eingangs genannten Art vorgeschlagen, die gemäss der Erfindung die im kennzeichnenden Teil des Anspruchs 1 und des Anspruchs 11 genannten Merkmale aufweisen.

Das Auskleiden der Form durch Tiefziehen einer dünnen thermoplastischen Folie kann automatisch erfolgen und benötigt nur kurze Zeit für das Einbringen und Erwärmen der Folie, so dass die Taktzeit der Brettfertigung durch die Herstellung der Obrflächenschicht praktisch nicht verlängert wird. Trotz der geringen Dicke der tiefgezogenen thermoplastischen Folie und des damit gewährleisteten geringen Gewichts des Schalenlaminats und somit des Bretts ergibt sie zusammen mit der matten- bzw. gewebeverstärkten Polyurethanharzschicht ein sehr tritt- und schlagfestes Schalenlaminat. Die Folie verhindert jegliche Wasseraufnahme des Laminats und schützt es zugleich vor UV-Strahlung. Die durch das Pressen während des Aushärtens und die hohe Adhäsion des verwendeten Polyurethanharzes zu anderen Materialien erreichte innige Verbindung lässt weder bei der mechanischen Belastung des Bretts noch bei wiederholter starker Erwärmung durch Sonneneinstrahlung ein bereichsweises Ablösen der Folie von der matten- bzw. gewebeverstärkten Polyurethanharzschicht bzw. dieser Polyurethanharzschicht von dem Schaumkern zu. Polyurethanharz ist wesentlich billiger und härtet viel schneller aus als Epoxyharz, so dass sich durch den geringeren Materialpreis und die kürzeren Taktzeiten eine insgesamt billigere Herstellung ergibt. Darüberhinaus ist seine Verarbeitung mit geringeren gesundheitlichen Risiken verbunden.

Durch die gemäss Anspruch 2 vorgesehene Aufrechterhaltung des Unterdrucks während des Pressens und Aushärtens des Laminats wird jede Formabweichung durch Schrumpfung der Folie beim Abkühlen derselben auf die Aushärtetemperatur des Laminats vermieden.

Wenn das Polyurethanharz mittels eines Reaktionsverzögerers derart eingestellt wird, dass eine Verzögerung der chemischen Reaktion seiner Komponenten von mehreren Minuten, insbesondere von etwa 10 min auftritt, bleibt ausreichend Zeit, das Harz auf den mit Fasermaterial besetzten Schaumkern aufzugiessen und den Kern dann in die Form einzulegen und die Form zu schliessen. Wenn dann die Form während des Aushärtens des Schalenlaminats gemäss einer Weiterbildung der Erfindung auf eine Temperatur von ca. 80° gehalten wird, ergibt sich eine Aushärtezeit von ca. 5 min. Vergleicht man den Wert mit der für Epoxyharz erforderlichen Aushärtezeit von ca. 30 min, so wird deutlich, dass die Herstellungskapazität pro Werkzeugersatz bei Anwendung des erfindungsgemässen Verfahrens wesentlich höher liegt. Man kann etwa davon ausgehen, dass eine fünffache Herstellungskapazität erreichbar ist.

Vorteilhafte Ausgestaltungen der Erfindung sind Gegenstand der weiteren abhängigen Ansprüche.

Die Erfindung wird nachstehend anhand der Beschreibung von Ausführungsbeispielen unter Bezugnahme auf die Zeichnung näher erläutert. Es zeigen:

Fig. 1 eine schematische Darstellung eines Formwerkzeugs, und

Fig. 2 eine Teilschnittdarstellung eines nach dem erfindungsgemässen Verfahren hergestellten und erfindungsgemäss aufgebauten Brettkörpers.

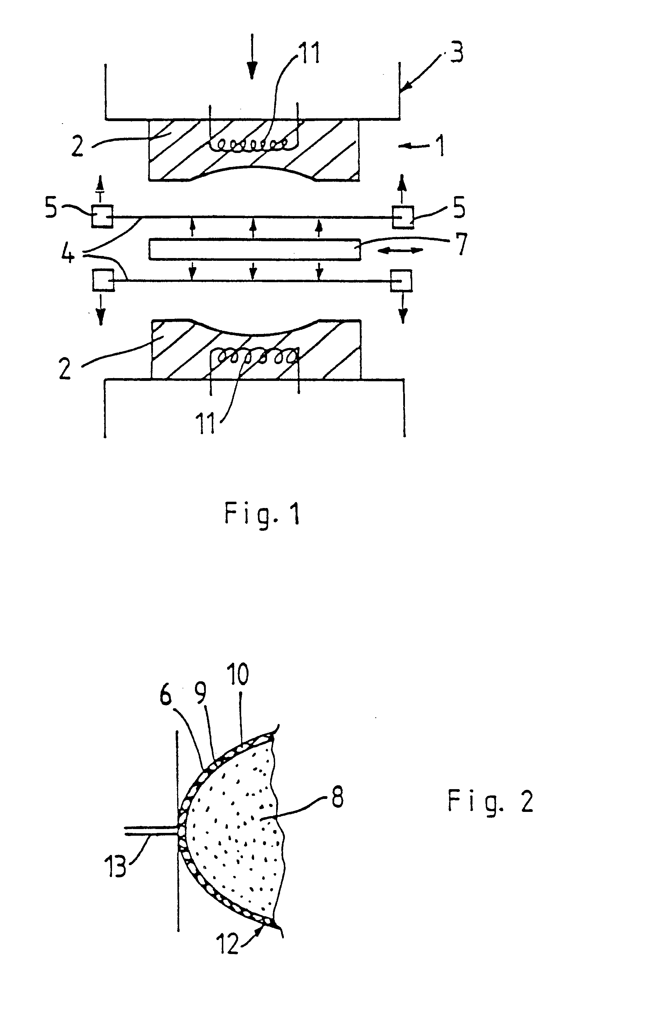

Das in Fig. 1 dargestellte Formwerkzeug 1 besteht aus zwei Formhälften 2, die in einer Presse 3 untergebracht sind.

Von zwei übereinander angeordneten, nicht dargestellten Folienrollen werden zunächst zwei Folienbahnen 4 abgezogen und mittels Spannrahmen 5 in einem gewissen Abstand zwischen die Formhälften 2 verfahren, wo sie die in Fig. 1 eingezeichnete Lage einnehmen.

Es handelt sich hierbei um eine Folie aus thermoplastischem Material, die die Oberflächenschicht 6 des in Fig. 2 gezeigten Brettkörpers bilden soll. Als Folienmaterial kommen geeignete thermoplastische Materialien wie ABS (Acrylnitril-Butadien-Styrol-Copolymer), ASA (Acrylkautschuk-Styrol-Acrylnitril-Copolymer), PC (Polycarbonat) und PMMA (Polymethylmethacrylat) in Betracht. Die Folienstärke beträgt zwischen 0,1 und 0,5 mm. Sie liegt vorzugsweise bei 0,2 mm. Die Aussenflächen der Folienbahnen können bereits mit dem gewünschten Design bedruckt sein.

Wie in Fig. 1 gezeigt ist, wird ein Heizstrahler 7 zwischen die Folienbahnen 4 gefahren, der das Folienmaterial auf die Umformtemperatur erwärmt. Wenn diese erreicht ist, werden die beiden Folienbahnen 4 mittels der Spannrahmen 5 zur zugehörigen Formhälfte 2 nach oben bzw. unten bewegt und mittels Unterdruckanwendung tiefgezogen. Ausserdem wird der Heizstrahler 7 aus dem Raum zwischen den Formhälften 2 entfernt.

Andererseits wird zunächst ein Schaumkern 8 aus EPS (Styropor) oder PU (Polyurethan) vorgefertigt und mit Fasermatten bzw. Fasergewebe 9 umwickelt. Derartige Matten sind handelsüblich und verwenden Fasern wie beispielsweise Glas-, Aramid-, Polyamid- oder Kohlefasern. Wenn der vorgefertigte Schaumkern 8 vollständig mit einer oder mehreren Faserschichten umwickelt ist, wird mit Hilfe eines Rechens flüssiges Kunstharz 10 auf beiden Kernseiten auf die Fasermatten gegossen. Unmittelbar im Anschluss daran wird der so behandelte Schaumkern 8 in die untere Formhälfte 2, in der die tiefgezogene Folienbahn 4 noch mit Unterdruck gehalten wird, eingelegt und die Presse geschlossen. Durch den Druck der Presse und ein geringes Schäumvermögen des Kunstharzes verteilt sich dasselbe vollkommen in dem Raum zwischen dem Schaumkern 8 und der Folie 4 und härtet zu einer geschlossenen faserverstärkten Schale, die mit der Folie 4 und dem Schaumkern 8 eine innige Verbindung eingeht. Der Aushärtevorgang findet bei einer Formwerkzeugtemperatur von etwa 80°C innerhalb von ca. 5 Minuten statt. Zum Aufheizen des Formwerkzeugs sind Heizelemente 11 vorgesehen und in Fig. 1 angedeutet. Wenn das Formwerkzeug nicht aufgeheizt wird, vielmehr mit Raumtemperatur ausgehärtet wird, ergibt sich eine Aushärtezeit von etwa 9 Minuten.

Nach dem Aushärten wird der fertige Brettkörper 12 dem Formwerkzeug 1 entnommen. Es werden dann lediglich noch die überstehenden Folienränder 13, die in Fig. 2 gezeigt sind, abgetrennt. Ggf. werden im Anschluss daran die Schnittflächen, die allerdings äusserst schmal gehalten werden können, versiegelt. Auf diese Weise lässt sich eine Taktzeit von 20 Minuten realisieren, so dass etwa 24 Bretter innerhalb einer 8-Stunden-Schicht hergestellt werden können.

Bei dem zur Tränkung des Fasermaterials 9 verwendeten Kunstharz handelt es sich um speziell eingestelltes Polyurethanharz, das bekanntlich eine A-Komponente aus Polyol und eine B-Komponente aus Isocyanat besitzt. Der A-Komponente ist ein Reaktionsverzögerer beigegeben, der es erlaubt, die chemische Reaktion der Komponenten erst nach ca. 10 Minuten eintreten zu lassen. Darüberhinaus wird dem Polyurethanharz ein geringes Schäumvermögen gegeben. Auf diese Weise steht ausreichend viel Zeit zur Verfügung, um das Polyurethanharz auf den mit Fasermaterial umwickelten Schaumkern 8 aufzubringenm und das dabei entstehende Gebilde in das Formwerkzeug einzubringen und dasselbe zu schliessen, bevor die Reaktion einsetzt. Das gemeinsame Verpressen der Folie 4 und der mit Polyurethanharz 10 in der beschriebenen Art getränkten Faserschicht 9 mit dem Schaumkern 8 führt zu einem ausserordentlich schlagfesten Brettkörper hoher Längssteifigkeit und niedrigen Gewichts.

**Patentansprüche**

1. Verfahren zur Herstellung eines Segel- bzw. Wellenreitbretts mit laminierter Schale, bei dem ein Schaumkern (8) vorgefertigt und mit Fasermatten bzw. -gewebe (9) belegt wird, anschliessend flüssiges härtbares Polyurethanharz (10) auf beiden Seiten des Schaumkerns auf das Fasermaterial aufgegossen und das auf diese Weise entstehende Gebilde auf dem Schaumkern in einer geschlossenen, bereits mit einer Oberflächenschicht ausgekleideten zweiteiligen Form (2) zum Aushärten gebracht wird, dadurch gekennzeichnet, dass die Fasermatten bzw. das Fasergewebe (9) aus Glas-, Aramid-, Polyamid- oder Kohlefasern bestehen bzw. besteht, dass vor dem Einlegen des mit dem getränkten Fasermaterial besetzten Schaumkerns in die Form eine die Oberflächenschicht des Bretts bildende, thermoplastische Folie (4) mit einer Dicke von 0,1 bis 0,5 mm auf ihre Umformungstemperatur erwärmt und mittels Unterdruck in die Formhälften (2) tiefgezogen wird, und dass die Folie (4) nach dem Einlegen des Schaumkerns (8) beim Schliessen der Form mit der fasermatten- bzw. fasergewebeverstärkten Polyurethanharzschicht verpresst wird, wobei eine innige Verbindung zwischen der fasermatten- bzw. fasergewebeverstärkten Polyurethanharzschicht und der Folie einerseits und dem Schaumkern andererseits hergestellt wird.

2. Verfahren nach Anspruch 1, dadurch gekennzeichnet, dass der Unterdruck während des Pressens und Aushärtens des aus getränktem Fasermaterial und Folie (4) bestehenden Schalenlaminats in der geschlossenen Form (2) aufrechterhalten wird.

3. Verfahren nach einem der vorhergehenden Ansprüche, dadurch gekennzeichnet, dass die Form (2) während des Aushärtens des Schalenlaminats auf einer Temperatur von ca. 80°C gehalten wird.

4. Verfahren nach einem der vorhergehenden Ansprüche, dadurch gekennzeichnet, dass als thermoplastisches Material für die Folie (4) ABS, ASA, PC oder PMMA verwendet wird.

5. Verfahren nach einem der vorhergehenden Ansprüche, dadurch gekennzeichnet, dass zwei Folienbahnen (4) von einem Paar von Folienrollen abgezogen, abgeschnitten und zwischen die auf Abstand stehenden Formhälften (2) eingebracht werden, wobei die Längsränder der beiden Folienbahnen in einem Spannrahmen (5) gespannt werden.

6. Verfahren nach einem der vorhergehenden Ansprüche, dadurch gekennzeichnet, dass die Folie (4) vor dem Tiefziehen bedruckt wird.

7. Verfahren nach einem der vorhergehenden Ansprüche, dadurch gekennzeichnet, dass die Dicke der Folie (4) 0,2 mm beträgt.

8. Verfahren nach einem der vorhergehenden Ansprüche, dadurch gekennzeichnet, dass die überstehenden Folienränder (13) nach dem Entformen des Bretts (12) abgeschnitten und ggf die Schnittfläche versiegelt wird.

9. Verfahren nach einem der vorhergehenden Ansprüche, dadurch gekennzeichnet, dass das Polyurethanharz ein geringes Schäumvermögen aufweist.

10. Verfahren nach einem der vorhergehenden Ansprüche, dadurch gekennzeichnet, dass der Schaumkern (8) aus Styropor oder Polyurethanschaum besteht.

11. Segel- bzw. Wellenreitbrett, dadurch gekennzeichnet, dass es nach einem Verfahren gemäss einem der vorhergehenden Ansprüche hergestellt worden ist.

**Claims**

1. Process for the production of a sailboard or surfboard with laminated shell, in which a foam core (8) is prefabricated and covered with fibrous mats or fabric (9), liquid curable polyurethane resin (10) is subsequently poured onto the fibrous material on both sides of the foam core and the structure produced in this way on the foam core is cured in a closed two-part mould (2) lined with a surface layer, characterized in that the fibrous mats or the fibrous fabric (9) consist or consists of glass fibres, aramide fibres, polyamide fibres or carbon fibres, that, before inserting the foam core covered with saturated fibrous material into the mould, a thermoplastic film (4), having a thickness of 0.1 to 0.5 mm and forming the surface layer of the board, is heated to its thermoforming temperature and deep drawn into the mould halves (2) by means of vacuum, and in that, after inserting the foam core (8), the film (4) is pressed upon closing of the mould by the fibre mat-reinforced or fibre fabric-reinforced polyurethane resin layer, an intimate bond between the fibre mat-reinforced or fibre fabric-reinforced polyurethane resin layer amd the film on the one hand and the foam core on the other hand being established.

2. Process according to claim 1, characterized in that the vacuum is maintained in the closed mould (2) during pressing and curing of the shell laminate consisting of saturated fibrous material and film (4).

3. Process according to one of the preceding claims, characterized in that the mould (2) is kept at a temperature of approximately 80°C during curing of the shell laminate.

4. Process according to one of the preceding claims, characterized in that ABS, ASA, PC or PMMA is used as thermoplastic material for the film (4).

5. Process according to one of the preceding claims, characterized in that two film webs (4) are drawn off a pair of film reels, severed and introduced between the spaced-apart mould halves (2), the longitudinal edges of the two film webs being clamped in a clamping frame (5).

6. Process according to one of the preceding claims, characterized in that the film (4) is printed before deep drawing.

7. Process according to one of the preceding claims, characterized in that the thickness of the film (4) is 0.2 mm.

8. Process according to one of the preceding claims, characterized in that the projecting film edges (13) are cut off after demoulding of the board (12) and the cut face is possibly sealed.

9. Process according to one of the preceding claims, characterized in that the polyurethane resin has a low foaming capacity.

10. Process according to one of the preceding claims, characterized in that the foam core (8) consists of Styropor or polyurethane foam.

11. Sailboard or surfboard, characterized in that it has been produced by a process according to one of the preceding claims.

**Revendications**

1. Procédé de fabrication d'une planche à voile ou de surf comportant une coque stratifiée, dans lequel on préfabrique un noyau de mousse (8) et on le garnit de mats ou tissus de fibre (9), puis l'on applique par coulée de la résine de polyuréthane durcissable liquide (10) des deux côtés du noyau de mousse sur la matière fibreuse et l'on fait durcir l'article ainsi obtenu sur le noyau de mousse dans un moule fermé (2) en deux parties déjà revêtu d'une couche superficielle, caractérisé en ce que les mats de fibres ou le tissu de fibres (9) comprennent, respectivement comprend, des fibres de verre, d'aramide, de polyamide ou de carbone, en ce qu'avant l'insertion du noyau de mousse garni de matière fibreuse imprégnée dans le moule, on chauffe une feuille thermoplastique, (4) constituant la couche superficielle de la planche, d'une épaisseur de 0,1 à 0,5 mm à sa température de déformation et on l'emboutit dans les moitiés de moule (2) au moyen d'une dépression, et en ce qu'on comprime la feuille (4) après l'insertion du noyau de mousse (8), lors de la fermeture du moule, avec la couche de résine de polyuréthane renforcée par des mats de fibres ou un tissu de fibres, en réalisant une liaison intime entre la couche de résine de polyuréthane renforcée par des mats de fibres ou un tissu de fibres de verre et la feuille d'une part et le noyau de mousse, d'autre part.

2. Procédé selon la revendication 1, caractérisé en ce qu'on maintient la dépression pendant le moulage et le durcissement du stratifié de coque comprenant une matière fibreuse impregnée et la feuille (4) dans le moule fermé (2).

3. Procédé selon l'une des revendications précédentes, caractérisé en ce qu'on maintient le moule (2), pendant le durcissement du stratifié de coque, à une température d'environ 80°C.

4. Procédé selon l'une des revendications précédentes, caractérisé en ce qu'on utilise, comme matière thermoplastique pour la feuille (4), une matière à base de copolymère d'acrylonitrile-butadiène-styrène (ABS); de copolymère caoutchouc acrylique-styrène-acrylonitrile (ASA) de polycarbonate (PC) ou de polyméthacrylate de méthyle (PMMA).

5. Procédé selon l'une des revendications précédentes, caractérisé en ce qu'on dévide deux bandes de feuille (4) d'une paire de rouleaux de feuille, on les découpe et on les introduit entre les moitiés de moule (2) séparées, en fixant les bords longitudinaux des deux bandes de feuille dans un cadre de serrage (5).

6. Procédé selon l'une des revendications précédentes, caractérisé en ce qu'on imprime la feuille (4) avant l'emboutissage.

7. Procédé selon l'une des revendications précédentes, caractérisé en ce que l'épaisseur de la feuille (4) est de 0,2 mm.

8. Procédé selon l'une des revendications précédentes, caractérisé en ce qu'on découpe les bords de feuille (13) qui dépassent après le démoulgae de la planche (12) et l'on vitrifie éventuellement la surface de section.

9. Procédé selon l'une des revendications précédentes, caractérisé en ce que la résine de polyuréthane présente un faible pouvoir moussant.

10. Procédé selon l'une des revendications précédentes, caractérisé en ce que le noyau de mousse (8) est en styropor ou en mousse de polyuréthane.

11. Planche à voile ou de surf, caractérisé en ce qu'elle a été fabriquée par un procédé selon l'une des revendications précédentes.

0 152 440

Fig. 1

Fig. 2